# EUROPÄISCHE PATENTSCHRIFT

(11) **EP 1 222 377 B1**
(45) Veröffentlichungstag und Bekanntmachung des Hinweises auf die Patenterteilung: **13.08.2003**
(21) Anmeldenummer: 00963940.2
(22) Anmeldetag: 14.09.2000
(51) Int. Cl.: F02D 41/02, F01N 3/023

(54) **STEUERGERÄT ZUR REINIGUNG EINES SPEICHERKATALYSATORS EINES KRAFTFAHRZEUGS**
CONTROL DEVICE FOR CLEANING A STORAGE CATALYTIC CONVERTER IN A MOTOR VEHICLE
APPAREIL DE COMMANDE POUR PURIFIER UN CATALYSEUR ACCUMULATEUR D'UN VEHICULE AUTOMOBILE

(30) Priorität: 06.10.1999 DE 19948236
(43) Veröffentlichungstag der Anmeldung: 17.07.2002
(73) Patentinhaber: ROBERT BOSCH GMBH, 70442 Stuttgart (DE)
(72) Erfinder: FRESE, Thomas, 30989 Gehrden (DE); AUMAYER, Richard, 31199 Diekholzen (DE); HOLZE, Harald, CH-1024 Ecublens (CH); HEIZMANN, Frieder, CH-1135 Denens (CH); IBANEZ, Miguel, CH-1203 Genève (CH); LONGCHAMP, Jean-François, CH-1012 Lausanne (CH); PANDAZIS, Jean-Charles, CH-1066 Epalinges (CH); SCHWEIZER, Philippe, CH-1027 Lonay (CH)
(86) Internationale Anmeldenummer: DE0002961
(87) Internationale Veröffentlichungsnummer: WO01025606

(56) Entgegenhaltungen:
- EP-A- 0 859 132
- DE-A- 19 827 636

## Beschreibung

### Stand der Technik

Die Erfindung geht aus von einem Steuergerät zur Reinigung eines Speicherkatalysators eines Kraftfahrzeugs nach der Gattung des Hauptanspruchs. Speicherkatalysators werden zur Reinigung von Autoabgasen, beispielsweise NOX oder Ruß verwendet. Sie haben eine begrenzte Speicherkapazität und müssen bei Erreichen der Kapazitätsgrenze durch Erhöhung der Temperatur, beispielsweise durch zusätzliches Einspritzen von Kraftstoff gereinigt werden. Diese Reinigungsprozedur läuft unabhängig von der augenblicklichen Fahrsituation ab. So kann es vorkommen, daß die Reinigungsprozedur beispielsweise gerade dann beginnt, wenn das Fahrzeug im dichten Stadtverkehr oder in bestimmten Schutzgebieten fährt, in denen eine Reinigung unerwünscht ist, da sie zu erhöhten Abgaswerten, durch erhöhte Motordrehzahl zu mehr Geräuschemissionen und entsprechenden Geruchsbelästigungen führt. Andererseits ist bei Ausbleiben der Reinigungsprozedur mit schlechteren Abgaswerten des Kraftfahrzeugs zu rechnen, da der Speicherkat seine Wirksamkeit weitgehend verloren hat.

Dokument EP 0 859 132 A offenbart ein steuergerät, bei dem die Signale eines Navigationssystems berücksichtigt werden, wobei die Reinigung eines Speicherkatalysators in Abhängigkeit von dem standart oder der Fahrtroute durchgeführt wird.

### Vorteile der Erfindung

Die Aufgabe wird durch ein Steuergerät mit den Merkmalen des Hauptanspruchs gelöst.

Durch die in den abhängigen Ansprüche aufgeführten Maßnahmen sind vorteilhafte Weiterbildungen und Verbesserungen des im Hauptanspruch angegebenen Steuergeräts möglich. Besonders vorteilhaft ist, daß die Reinigungsprozedur beispielsweise bei freier Fahrt über eine Landstraße oder Autobahn durchgeführt wird, da hier in Folge des Fahrtwinds eine sehr schnelle Verwirbelung der Abgase entsteht und diese dabei schnell verteilt werden, so daß eine zusätzliche Belästigung dann sehr gering ist.

Da das Steuergerät die geplante Fahrtroute des Kraftfahrzeugs kennt, da diese Daten von einem Navigationsgerät übermittelt werden, kann es die Reinigungsprozedur automatisch durchführen, wenn sich das Fahrzeug in einem Gebiet befindet, in dem eine Reinigung zumutbar ist.

Als günstig wird jedoch auch angesehen, wenn das Steuergerät ein Signal abgibt, wann - unter Berücksichtigung der Fahrtroute und Umweltbedingungen - eine Reinigung des Speicherkatalysators vorgenommen werden kann. Der Fahrer kann dann selbst entscheiden, ob es sinnvoll ist, gerade in der gewählten Situation die Reinigung durchzuführen. Wenn plötzlich ein Stau auftritt, kann der Fahrer somit entscheiden, die Reinigungsprozedur zu einem anderen Zeitpunkt durchzuführen.

Da die Wirksamkeit des Speicherkatalysators nicht nur von seinem Füllgrad abgehängt, sondern auch von der Betriebstemperatur, dem Alter und den Fahrbedingungen, ist es vorteilhaft, daß das Steuergerät diese Parameter zur Bestimmung des geeigneten Reinigungszeitpunkts berücksichtigt.

### Zeichnung

Ein Ausführungsbeispiel der Erfindung ist in der Zeichnung dargestellt und in den nachfolgenden Beschreibungen näher erläutert.

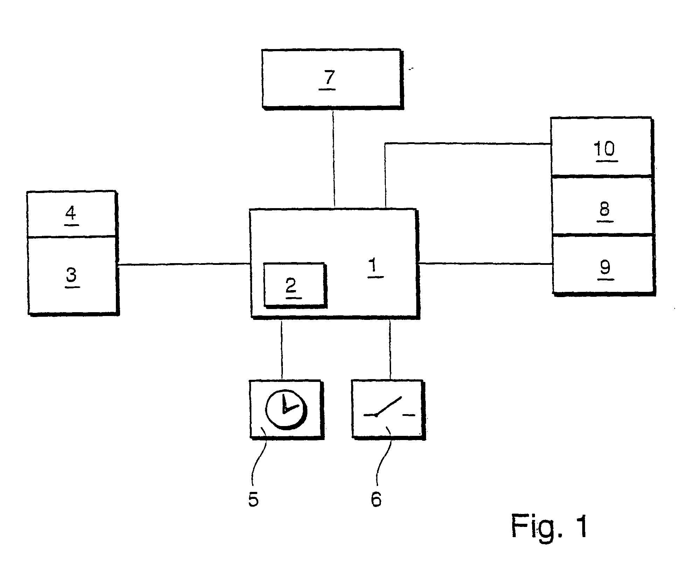

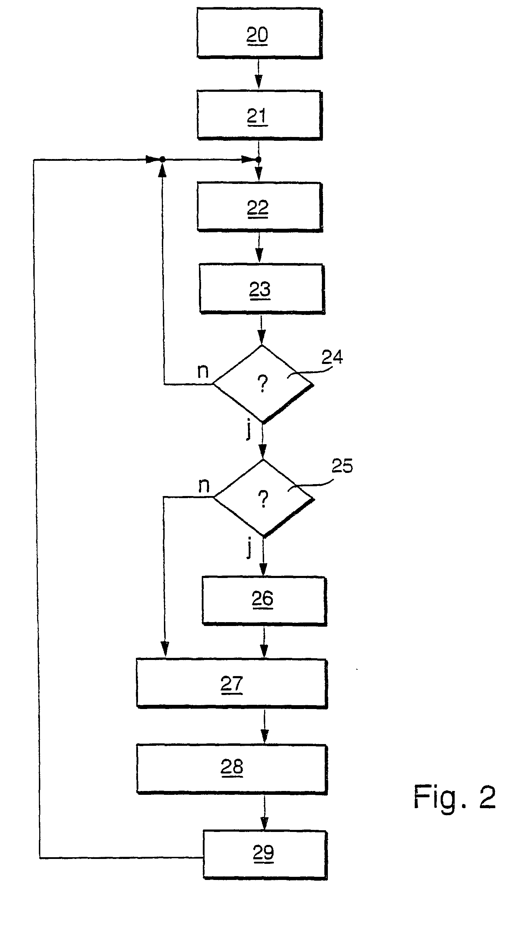

Es zeigen Figur 1 ein Blockschaltbild und Figur 2 ein Flußdiagramm.

### Beschreibung des Ausführungsbeispiels

Das Blockschaltbild der Figur 1 zeigt den prinzipiellen Aufbau der Anordnung. Ein Steuergerät 1 mit einem Speicher 2 ist verbunden mit einer Meßsonde 9, die ihrerseits aktuelle Daten eines Schadstoffspeichers, eines sogenannten Speicherkatalysators 8 erfaßt. Die Steuerung 1 steuert bei Bedarf die Regenerierung des Speicherkatalysators 8. Der Speicherkatalysator sitzt im Abgasstrang eines Verbrennungsmotors und wird vorwiegend zur Reinigung von Schadstoffen im Abgas wie NOx oder Ruß verwendet. Die Regeneration des Speicherkatalysators erfolgt beispielsweise bei NOx in recht kurzen Abständen und dauert nur Sekunden. Allerdings lagern sich während der Betriebszeit auch unerwünschte SOx-Verbindungen im Speicherkatalysator an, von denen er - je nach dem Schwefelanteil im Kraftstoff - nach einer längeren Betriebszeit befreit werden muß. Bei Ruß ist ebenfalls erst nach einer längeren Betriebszeit eine Regeneration erforderlich.

Zu den einzelnen Reinigungsverfahren soll hier nur erwähnt werden, daß die Regeneration beispielsweise entweder durch Zuführung von Reduktionsmittel im Abgas (z. B. Lambda-Verhältnis < 1) und/oder Temperaturerhöhung (z. B. durch Spätzündung oder Zusatzheizung) erfolgen kann.

Der Speicherkatalysator 8 ist des weiteren mit einer Reinigungsvorrichtung 10 verbunden, die über eine Leitung von dem Steuergerät 1 angesteuert wird. Eingangsseitig ist das Steuergerät 1 mit einem Navigationsgerät 3 verbunden, in dem ein Routenplan 4 für die vorgesehene Fahrtroute eingegeben ist. Als Navigationsgerät wird auch ein Empfänger für Navigationsdaten, beispielsweise ein Autoradio oder ein Funkgerät angesehen, das aktuelle Daten über die Fahrzeugposition, die Fahrtroute, Umweltbedingungen und/oder Verkehrsbeschränkungen liefert. Weiterhin ist das Steuergerät 1 mit einer Uhr 5, einem Schalter 6 und einer Anzeige 7 verbunden. Die Uhr 5 dient dabei zur Vorgabe der Uhrzeit, des Datums, der Fahrtzeit, der Betriebsdauer des Speicherkatalysators 8 usw. Der Schalter 6 dient zur manuellen Auslösung der Reinigungsprozedur durch die Reinigungsvorrichtung 10. Auf der Anzeige 7 ist ein Hinweis für eine notwendige Reinigung des Speicherkatalysators 8 vorgesehen. Zusätzliche Informationen über die Speicherkapazität, die mögliche Fahrtstrecke bis zum Reinigungsbeginn, die Betriebsdauer, Datum, Uhrzeit usw. sind möglich. Die Meßsonde 9 erfaßt alle Daten des Speicherkatalysators 8, aus denen die Restkapazität für den Speicherkatalysator 8 ermittelt werden kann. Dies sind Daten wie die Betriebsdauer, das Alter, die Temperatur, die aktuelle Abgasbelastung sowie der Füllstand. Diese Daten werden dem Steuergerät 1 übermittelt und beispielsweise im Speicher 2 gespeichert.

In weiterer Ausgestaltung der Erfindung ist vorgesehen, daß der Verbrennungsmotor selbst oder sein Steuergerät Bestandteil der Reinigungsvorrichtung 10 ist, um die Temperaturerhöhung oder Zufuhr des Reduktionsmittels zu bewirken.

Im folgenden wird die Wirkungsweise dieser Anordnung und insbesondere das Steuergerät 1 näher erläutert. Da die peripheren Einrichtungen 3 bis 10 per se bekannt sind, wird auf diese nicht näher eingegangen.

Das Flußdiagramm der Figur 2 gibt den Ablauf im Steuergerät 1 wieder. Nach dem Start des Fahrzeugs in Position 20 werden zunächst die aktuellen Daten des Speicherkatalysators 8, die von der Meßsonde 9 gemessen werden, eingeladen und daraus die Ist- und Restkapazität des Speicherkatalysators 8 berechnet. Des weiteren werden die Routendaten des Navigationsgeräts 3, der Standort des Kraftfahrzeugs, die Uhrzeit und das Datum eingelesen (Position 21). In Position 22 erfolgt eine neue Messung der Betriebsbedingungen durch die Meßsonde 9, so daß in Position 23 das Steuergerät berechnen kann, nach welcher Betriebszeit und zu welchem Zeitpunkt eine Reinigung erforderlich sein kann bzw. wie groß die Restkapazität des Speicherkatalysators 8 ist. Dabei werden zusätzliche Parameter wie die Betriebstemperatur, das Alter des Speicherkatalysators 8 und/oder die Fahrbedingungen mit der entsprechenden Abgasentwicklung berücksichtigt. In Position 24 wird geprüft, ob eine Katalysatorreinigung noch während der aktuellen Fahrtroute durchgeführt werden muß. Ist dies nicht der Fall, erfolgt ein Rücksprung auf Position 22 mit einer neuen Messung der Betriebsbedingungen usw.

Fällt dagegen die Reinigung innerhalb der aktuellen Fahrtroute an, dann wird in Position 25 geprüft, ob es für diese Route insbesondere zu dem vorgesehenen Reinigungszeitpunkt irgendwelche umwelt- oder verkehrsbedingte Beschränkungen gibt. Diese Beschränkungen können beispielsweise darin liegen, daß das Fahrzeug in einem Stadtgebiet und insbesondere in einer Kurzone fährt, daß für ein Gebiet Fahrbeschränkungen wegen Smog- oder Ozonalarm angeordnet wurden, oder das Fahrzeug befindet sich in einem Verkehrsstau, so daß zusätzliche Belastungen durch den Reinigungsprozeß unerwünscht sind.

Sind derartige Beschränkungen nicht vorhanden, kann in Position 27 der Reinigungsprozeß von Hand initialisiert oder automatisch durchgeführt werden. Im anderen Fall wird in Position 26 der Ort oder die Zeit für den Reinigungsbeginn festgelegt. Diese Ankündigung wird auf der Anzeige 7 dargestellt. Durch die Handbetätigung hat der Fahrer die Möglichkeit, unmittelbar in den Reinigungsprozeß einzugreifen, wenn er diese Prozedur für den gegebenen Zeitpunkt nicht für geeignet hält.

Nach erfolgter Reinigung werden in Position 28 die Katalysatordaten zurückgesetzt und in Position 29 erfolgt auf der Anzeige, beispielsweise ob die Reinigung erfolgreich war, ob der Speicherkatalysator 8 wieder voll belastbar und aufnahmefähig ist oder ob ein Defekt vorliegt bzw. ob ein Speicherwechsel notwendig wird. In Position 22 wiederholt sich der Zyklus erneut.

Die oben genannten Funktionen des Flußdiagramms der Figur 2 werden vorteilhaft als Softwareprogramm ausgebildet, das von einem entsprechenden Rechner des Steuergeräts 1 abgearbeitet wird.

## Patentansprüche

1. Steuergerät in Verbindung mit einem Speicherkatalysator (8) eines Kraftfahrzeugs zur Steuerung und Überwachung des zyklischen Reinigungsvorgangs und mit einer Meßsonde (9), mit einem Steuergerät (1) das mit einem Navigationsgerät (3) verbunden ist, das wenigstens die Daten über den aktuellen Standort des Kraftfahrzeugs und die Fahrtroute des Kraftfahrzeugs kennt, wobei das Steuergerät (1) ausgebildet ist, die Reinigung des Speicherkatalysators (8) in Abhängigkeit vom Standort und der Fahrtroute durchzuführen, **gekennzeichnet durch** Mittel zur vorzeitigen Durchführung der Reinigung des Speicherkatalysators (8), wenn die Fahrtroute erwarten läßt, dass eine spätere Reinigung nicht möglich ist.

2. Steuergerät nach Anspruch 1, **dadurch gekennzeichnet, daß** das Steuergerät (1) ausgebildet ist, die Reinigung des Speicherkatalysators (8) außerhalb eines Schutzgebiets oder Zonen mit Verkehrsbeschränkungen durchzuführen.

3. Steuergerät nach Anspruch 1 oder 2, **dadurch gekennzeichnet, daß** das Steuergerät (1) ausgebildet ist, die Reinigung des Speicherkatalysators (8) bei freier Fahrt über einer Landstraße oder einer Autobahn durchzuführen.

4. Steuergerät nach einem der vorhergehenden Ansprüche, **dadurch gekennzeichnet, daß** ein Signal auf einer Anzeige (7) abgegeben wird, wenn unter Berücksichtigung von der Fahrtroute und/oder von Umweltbedingungen eine Reinigung vorgenommen werden kann.

5. Steuergerät nach einem der vorhergehenden Ansprüche, **dadurch gekennzeichnet, daß** das Steuergerät (1) ausgebildet ist, die Temperatur und/oder das Alter des Speicherkatalysators (8) für die Berechnung der Restkapazität zu berücksichtigen.

## Claims

1. Control device in conjunction with a storage catalytic converter (8) of a motor vehicle for controlling and monitoring the cyclical cleaning process, and having a measuring probe (9), having a control device (1) which is connected to a navigation device (3) which is provided at least with the data on the current location of the motor vehicle and on the route of the motor vehicle, the control device (1) being designed to carry out the cleaning of the storage catalytic converter (8) as a function of the location and the route, **characterized by** means for prematurely carrying out the cleaning of the storage catalytic converter (8) if it is likely that the route will not permit later cleaning.

2. Control device according to Claim 1, **characterized in that** the control device (1) is designed to carry out the cleaning of the storage catalytic converter (8) outside a protected area or zones with traffic restrictions.

3. Control device according to Claim 1 or 2, **characterized in that** the control device (1) is designed to carry out the cleaning of the storage catalytic converter (8) when driving along on a country road or a motorway.

4. Control device according to one of the preceding claims, **characterized in that** a signal is output on a display (7) if cleaning can be performed taking into account the route and/or environmental conditions.

5. Control device according to one of the preceding claims, **characterized in that** the control device (1) is designed to take into account the temperature and/or the age of the storage catalytic converter (8) for the calculation of the residual capacity.

## Revendications

1. Appareil de commande relié à un catalyseur à accumulation (8) d'un véhicule automobile pour commander et surveiller l'opération cyclique de purification, cet appareil de commande (1) étant relié à une sonde de mesure (9) et à un appareil de navigation (3) connaissant au moins les données concernant la position actuelle du véhicule et l'itinéraire qu'il suit, l'appareil (1) étant constitué de manière à commander la purification du catalyseur à accumulation (8) en fonction de la position et de l'itinéraire du véhicule,
**caractérisé en ce que**
cet appareil comporte des moyens pour déclencher précocement la purification du catalyseur à accumulation (8) si l'itinéraire fait apparaître qu'une purification ne peut avoir lieu plus tard.

2. Appareil de commande selon la revendication 1,
**caractérisé en ce que**
cet appareil (1) est conçu de manière que la purification du catalyseur à accumulation (8) ait lieu en dehors d'une zone protégée ou de zones à limitation de trafic.

3. Appareil de commande selon l'une quelconque des revendications 1 ou 2,
**caractérisé en ce que**
cet appareil (1) est conçu de manière que la purification du catalyseur à accumulation (8) ait lieu en circulation libre sur une route dans la campagne ou sur une autoroute.

4. Appareil de commande selon l'une quelconque des revendications précédentes,
**caractérisé en ce qu'**
un signal est délivré sur un indicateur (7) quand, compte tenu de l'itinéraire et/ou des conditions de l'environnement, une purification peut avoir lieu.

5. Appareil de commande selon l'une quelconque des revendications précédentes,
**caractérisé en ce qu'**
l'appareil (1) est conçu de manière à prendre en compte la température et/ou l'âge du catalyseur à accumulation (8), dans le calcul de la capacité résiduelle de celui-ci.
